# EUROPÄISCHE PATENTSCHRIFT

(11) **EP 4 205 008 B1**
(45) Veröffentlichungstag und Bekanntmachung des Hinweises auf die Patenterteilung: **14.05.2025**
(21) Anmeldenummer: 22703282.8
(22) Anmeldetag: 17.01.2022
(51) Int. Cl.: H04L 9/40, G06F 21/60, H04L 9/14, G06F 21/64

(54) **VERFAHREN ZUR ABSICHERUNG DER KOMMUNIKATION ZWISCHEN EINEM KOMMUNIKATIONSSYSTEM EINES FAHRZEUGS UND EINEM FAHRZEUGEXTERNEN SERVER**
METHOD FOR SECURING COMMUNICATION BETWEEN A COMMUNICATION SYSTEM OF A VEHICLE AND A SERVER EXTERNAL TO THE VEHICLE
PROCÉDÉ DE SÉCURISATION DE COMMUNICATION ENTRE UN SYSTÈME DE COMMUNICATION D'UN VÉHICULE ET UN SERVEUR EXTERNE AU VÉHICULE

(30) Priorität: 02.02.2021 DE 102021000522
(43) Veröffentlichungstag der Anmeldung: 05.07.2023
(73) Patentinhaber: Mercedes-Benz Group AG, 70372 Stuttgart (DE)
(72) Erfinder: FRIESEN, Viktor, 76139 Karlsruhe (DE); PAVLOVIC, Viktor, 70469 Stuttgart (DE)
(74) Vertreter: Novagraaf Group
(86) Internationale Anmeldenummer: PCT/EP2022/050824
(87) Internationale Veröffentlichungsnummer: WO 2022/167201

(56) Entgegenhaltungen:
- DE-A1- 102018 101 856
- VODAFONE: "pCR to TR 33.899: Quantum safe cryptography solutions", vol. SA WG3, no. Tenerife (Spain); 20161107 - 20161111, 31 October 2016 (2016-10-31), XP051170730, Retrieved from the Internet <URL:http://www.3gpp.org/ftp/tsg_sa/WG3_Security/TSGS3_85_Santa_Cruz/Docs/> [retrieved on 20161031]
- PAULO S L M BARRETO ET AL: "qSCMS: Post-quantum certificate provisioning process for V2X", vol. 20190103:181623, 31 December 2018 (2018-12-31), pages 1 - 18, XP061027449, Retrieved from the Internet <URL:http://eprint.iacr.org/2018/1247.pdf> [retrieved on 20181231]

## Beschreibung

Die Erfindung betrifft ein Verfahren zur Absicherung der Kommunikation zwischen einem Kommunikationssystem eines Fahrzeugs und einem fahrzeugexternen Server über eine Kommunikationsschnittstelle nach der im Oberbegriff von Anspruch 1 näher definierten Art.

Im Allgemeinen ist es so, dass moderne Fahrzeuge, und hier insbesondere Personenkraftwagen und Nutzfahrzeuge, Teil eines großen Fahrzeug-Ökosystems sind. Ein zentraler Teil dieses Ökosystems ist dabei das sogenannte Backend. Dies ist ein fahrzeugexterner Server, welcher meist von dem Fahrzeughersteller betrieben wird. Die Fahrzeuge sind über das Internet mit diesem fahrzeugexternen Server verbunden. Die Kommunikation zwischen diesem Backend und den Fahrzeugen wird dabei typischerweise über kryptografische Verfahren abgesichert, um einerseits die Privatsphäre des Fahrzeugnutzers zu wahren und um andererseits keinen externen Eingriff in den Datenverkehr zu ermöglichen, welcher insbesondere bei der Übertragung von Daten, welche die Fahrzeugsteuerung betreffen, von Hackern genutzt werden könnte, um die Fahrzeuge anzugreifen und wichtige Funktionen zu manipulieren.

Gängige Praxis ist dabei der Einsatz auf asymmetrischer Kryptografie basierender Verfahren. Diese werden typischerweise in Form des TLS (Transport Layer Security), manchmal auch des IPSec (Internet Protocol Security) eingesetzt, die ihrerseits herkömmliche asymmetrische Verfahren, wie z.B. das auf Primzahlenzerlegung basierende RSA oder ECC (Elliptic Curve Cryptography) nutzen.

Das Patent DE 10 2009 037 193 B4 beschreibt ein Kommunikationssystem 2 und ein Verfahren zur Durchführung eines Austauschs eines solchen asymmetrischen Schlüssels zwischen einem Fahrzeug und einem fahrzeugexternen Server, um die Datenverbindung dementsprechend kryptografisch abgesichert, also mit einer Verschlüsselung und/oder Authentifizierung, zu betreiben.

Die US 2012/0045055 A1 zeigt eine Kommunikationsvorrichtung, welche zwei verschiedene kryptografische Modi ermöglicht. Zwischen diesen kann über eine Einheit zum Wechseln der kryptografischen Modi hin- und her- geschaltet werden. Die Offenbarung stellt keinen Bezug zu einem Fahrzeug-Ökosystem her.

Die US 2018/0217828 A1 zeigt die verschlüsselte Kommunikation zwischen einem Fahrzeug und einem fahrzeugexternen Server an sich.

VODAFONE. "pCR to TR 33.899: Quantum safe cryptography solutions" 1-11, Vol. SA WG3, No. Tenerife (Spain); 20161107 - 20161111, 31 October 2016 (2016-10-31), 3GPP DRAFT; S3-161893 - PCR TO TR 33.899, QUANTUM SAFE SOLUTIONS, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANC, Bd. SA WG3, Nr. Tenerife (Spain); 20161107- 20161111, 31. Oktober 2016 (2016-10-31), (XP051170730), beschreibt eine Systemarchitektur für ein Netzwerk, welches sowohl aktuell als auch nach dem Markteintritt von Quanten-Computern eine sichere Authentifizierung und Verschlüsselung ermöglicht. Dafür kann ein erstes und ein zweites Absicherungsverfahren vorgesehen werden, wobei das zweite Absicherungsverfahren initial implementiert oder über ein Softwareupdate eingebracht werden kann. Dieses zweite Absicherungsverfahren ist dann ein post-quanten-resistentes Absicherungsverfahren, während das erste Absicherungsverfahren dies nicht ist.

Mit dem Thema der post-quanten-resistenten Absicherung für Prozesse in einer Fahrzeugkommunikation (V2x) beschäftigt sich auch PAULOS L M BARRETO ET AL: "qSCMS: Post-quantum certificate provisioning process for V2X", IACR, INTERNATIONAL ASSOCIATION FOR CRYPTOLOGIC RESEARCHBd. 20190103:181623, 31. Dezember 2018 (2018-12-31), Seiten 1-18, (XP061027449). Hier wird eine ähnliche Anwendung wie im zuvor genannten Fachartikel auf den Bereich einer Fahrzeugkommunikation bezogen.

Außerdem beschreibt die DE 10 2018 101 856 A1 ein Verfahren zur Absicherung der Kommunikation zwischen einem Kommunikationssystem eines Fahrzeugs und einem Server, welches im Wesentlichen die Merkmale im Oberbegriff des geltenden Hauptanspruchs aufweist.

Die typischerweise eingesetzten asymmetrischen kryptografischen Verfahren wie beispielsweise, ECC oder RSA haben dabei den Vorteil, dass sie nach heutigem Stand eine relativ sichere Absicherung bei minimiertem Aufwand bieten. All diese Verfahren beruhen dabei jedoch auf kryptografischen Algorithmen, deren Sicherheit als nicht robust gegenüber Quantencomputern angesehen wird. Quantencomputer sind durch die Art, mit der sie rechnen in der Lage asymmetrische kryptografische Verfahren zu knacken und abgesicherte Daten innerhalb kürzester Zeit zu entschlüsseln. Die für die Kommunikation zwischen Fahrzeug und Backend typischerweise eingesetzten Verfahren zur kryptografischen Absicherung, also insbesondere zur Verschlüsselung und/oder Authentifizierung, sind dann nicht mehr sicher. Diese sogenannte Post-Quanten-Bedrohung war bisher eine eher theoretische Bedrohung, da Quantencomputer noch als reine Forschungsinstrumente galten und nur mit sehr hohem finanziellem Aufwand zu realisieren waren. In den vergangenen Jahren hat sich die Entwicklung von Quantencomputern jedoch deutlich beschleunigt. Eine sichere Prognose, dass ausreichend leistungsfähige Quantencomputer in den kommenden zehn Jahren am Markt nicht kommerziell verfügbar sein werden, lässt sich daher aus heutiger Sicht nicht mehr machen.

Fahrzeuge, welche heute auf den Markt kommen, werden in der Regel 10 bis 15 Jahre auf den Straßen unterwegs sein. Dies bedeutet, dass die Post-Quanten-Bedrohung, also die potenzielle Möglichkeit durch zu einem späteren Zeitpunkt leicht oder insbesondere kommerziell verfügbare Quantencomputer die herkömmliche asymmetrische kryptografische Absicherung einfach zu knacken, bereits für heute auszuliefernde Fahrzeuge relevant ist. Die Kommunikation einer Kommunikationsvorrichtung des Fahrzeugs mit dem externen Server, welche über heute meist auf RSA oder ECC basierende kryptografische Protokolle abgesichert ist, wäre also mit dem Eintreten dieser Post-Quanten-Bedrohung nicht mehr sicher, sodass eine sichere Kommunikation aus heutiger Sicht nicht über die gesamte zu erwartende Betriebsdauer der Fahrzeuge gewährleistet werden kann.

Um der Post- Quanten-Bedrohung gerecht zu werden, wird allgemein seit einigen Jahren an asymmetrischen Algorithmen geforscht, die resistent gegen die Post-Quanten-Bedrohung sind. Es handelt sich dabei um die gängigerweise als Post-Quantum-Cryptography oder PQC bezeichneten Ansätze. Diese sind jedoch noch nicht sehr ausgereift, sodass sie sich heute noch nicht eignen, um die herkömmlichen Verfahren zu ersetzen. Damit können also heutige Fahrzeuge noch nicht mit post-quanten-fähigen asymmetrischen kryptografischen Absicherungsverfahren konzipiert werden, da derartige Techniken noch nicht so weit ausgereift sind, dass eine abschließende Beurteilung der zu erwartenden Sicherheit möglich ist. Außerdem gibt es bisher keine Standardisierung und die Ansätze haben einen hohen Ressourcenbedarf. Ein vorauseilender Umstieg auf solche quantencomputerresistente kryptografische Verfahren ist also zum jetzigen Zeitpunkt weder sinnvoll noch einfach möglich. Gäbe es bereits ein als ausreichend sicher angesehenes standardisiertes PQC-Verfahren, so wäre auch ein solches nicht sinnvoll in die heutigen Kommunikationsvorrichtungen von Fahrzeugen zu implementieren, da ein höherer Kostenaufwand und ein hoher Ressourcenverbrauch der Wirtschaftlichkeit im aktuellen Fahrzeug-Ökosystem entgegensteht.

Ferner ist es so, dass symmetrische Verfahren wie beispielsweise AES (Advanced Encryption Standard) oder Hash-Verfahren wie beispielsweise SHA-512 (Secure Hash Algorithm) oder auch symmetrische Authentifizierungsverfahren wie beispielsweise HMAC (Hashed Message Authentication Code) nach heutigem Kenntnisstand von der Post-Quanten-Bedrohung nicht fundamental betroffen sind. Nach Kenntnisstand wäre die Sicherheit dieser Verfahren durch das Eintreten der Post-Quanten-Bedrohung zwar halbiert, sodass ein 128 bit-Schlüssel nach Verfügbarkeit von Quantencomputern noch eine 64-bit Sicherheit liefert. Eine solche Schwächung lässt sich jedoch relativ einfach durch erhöhte Schlüssellängen ausgleichen.

Die ältere nicht vorveröffentlichte deutsche Anmeldung mit den Aktenzeichen 10 2020 001 199.3 der Anmelderin zeigt eine Kommunikationsvorrichtung sowie ein Verfahren zur kryptografischen Absicherung der Kommunikation. Dabei sind zwei explizite Modi beschrieben, ein Prä-Quanten-Modus und ein Post-Quanten-Modus. Im Prä-Quanten-Modus werden dabei konventionelle asymmetrische kryptografische Verfahren verwendet, im Post-Quanten-Modus dementsprechend nur post-quanten resistente kryptografische Verfahren. Der Modus, in welchem sich das System befindet, wird über einen binären Wert angezeigt, welcher unveränderbar in einem entsprechend abgesicherten Speicher, welcher beispielsweise als Write-Once-Memory (WOM) ausgebildet sein kann, abgelegt.

Die Aufgabe der hier vorliegenden Erfindung besteht nun darin ein Verfahren zur Absicherung der Kommunikation zwischen einem Kommunikationssystem eines Fahrzeugs und einem fahrzeugexternen Server bereitzustellen, welches im Falle des Eintretens der Post-Quanten-Bedrohung weiterhin eine sichere Kommunikation gewährleistet.

Erfindungsgemäß wird diese Aufgabe durch ein Verfahren mir den Merkmalen im Anspruch 1, und hier insbesondere im kennzeichnenden Teil des Anspruchs 1, gelöst. Vorteilhafte Ausgestaltungen und Weiterbildungen des Verfahrens ergeben sich aus den hiervon abhängigen Unteransprüchen.

Das Eintreten der Post-Quanten-Bedrohung an sich ist dabei natürlich in der Realität ein wenig greifbares Ereignis. Es ist daher unter dem Eintreten der Post-Quanten-Bedrohung im Sinn des erfindungsgemäßen Verfahrens eine z.B. über einen fahrzeugexternen Server ausgelöste Aktion zu verstehen, welche ausgelöst wird, wenn z.B. von einem Fahrzeughersteller, einer Behörde oder dergleichen festgestellt worden ist, das prä-quanten-resistente Verfahren bald nicht mehr sicher sein könnten. In diesem Fall kann über eine solche Aktion, z.B. das Setzten eines Flags, das Initiieren eines Softwareupdates oder dergleichen, für alle mit dem Server verbundene Fahrzeuge die Ära der Post-Quanten-Bedrohung gestartet werden.

Das erfindungsgemäße Verfahren nutzt im Wesentlichen ähnlich wie die ältere nicht vorveröffentlichte oben genannte deutsche Anmeldung ein erstes Absicherungsverfahren zur nicht post-quanten-resistenten Absicherung von ausgetauschten Daten über eine Kommunikationsschnittstelle, welches in das Kommunikationssystem implementiert ist, also typischerweise den aktuellen Auslieferungszustand darstellt. Um der Problematik zu begegnen, dass derzeit bezüglich der post-quanten-resistenten Absicherung noch keine gesicherten Erkenntnisse existieren, wird ein solches Verfahren nicht zwingend in das Kommunikationssystem implementiert, was jedoch auch möglich ist, sondern es wird die Möglichkeit geschaffen, über eine entsprechende Schnittstelle die Funktionen und benötigten Abläufe für ein solches Verfahren nachträglich zu implementieren. Auch die Schnittstelle selbst kann prinzipiell in das Kommunikationssystem implementiert sein, kann aber auch ihrerseits im Rahmen eines abgesicherten Softwareupdates zuerst noch geschaffen werden. Dies ergibt eine außerordentlich hohe Flexibilität der möglichen Verfahren. Zwar ist es derzeit bekannt, dass aktuell übliche asymmetrische Verfahren zur Absicherung von Daten nicht post-quanten-resistent sein werden. Symmetrische Verfahren werden dies voraussichtlich sein, vor allem dann, wenn sie eine ausreichend hohe Schlüssellänge besitzen. Das Problem ist, dass symmetrische Verfahren die Schlüsselverteilung und die Schlüsselaushandlung betreffend nicht flexibel genug sind und derzeit nicht effizient für die Absicherung der Kommunikation zwischen sehr vielen heterogenen Teilnehmern, wie es bei einem Fahrzeug-Ökosystem erforderlich ist, eingesetzt werden können. Diese symmetrischen und aller Voraussicht nach auch post-quanten-resistenten Verfahren können also nur für einzelne besonders wichtige Daten und Vorgänge Verwendung finden. Aller Voraussicht nach wird es aber in der Zukunft geeignete und ausreichend sichere post-quanten-resistente Verfahren und Protokolle geben, die alle Voraussetzungen, insbesondere auch solche eine effiziente Schlüsselverteilung und Schlüsselaushandlung betreffend, erfüllen und auch für große Systeme mit sehr vielen heterogenen Teilnehmern geeignet sind. Z.B. eine Art post-quanten-resistente asymmetrische Kryptografie. Durch das erfindungsgemäße Verfahren wird nun die Möglichkeit geschaffen, auf zukünftige Entwicklungen in den bereits jetzt in Fahrzeugen verbauten Kommunikationssystemen zu reagieren, indem zu einem späteren Zeitpunkt bei Bedarf auf sichere Weise auf ein zweites post-quanten-resistentes Absicherungsverfahren umgestiegen werden kann.

Ferner ist es so, das Schlüsselmaterial, und dies ist der besondere Vorteil des erfindungsgemäßen Verfahrens, nachträglich implementiert werden kann, wofür eine weitere Schnittstelle zum Einsatz kommt. Im Gegensatz zu der zuvor beschriebenen Schnittstelle, um die Verfahren und Abläufe zu implementieren, ist diese weitere Schnittstelle, die dazu dient, bei Bedarf das benötigte Schlüsselmaterial für die post-quanten resistente Absicherung der Kommunikation zu implementieren, kryptografisch und post-quanten resistent verschlüsselt realisiert. Bei der anderen zuvor beschriebenen Schnittstelle reicht eine integritäts- und authentizitätsgeschützte Absicherung aus. Bei der weiteren Schnittstelle, über welche das für die Verfahren, welche über die andere Schnittstelle implementiert worden sind, benötigte Schlüsselmaterial übertragen wird, ist zusätzlich eine symmetrische (post-quanten resistente) Verschlüsselung notwendig, um hier die Vertraulichkeit des Schlüsselmaterials in jedem Fall zu garantieren. Dafür ist eine initiale Ausstattung des Kommunikationssystems mit geheimem Schlüsselmaterial für die Übertragung vorgesehen.

Eine sehr günstige Ausgestaltung des erfindungsgemäßen Verfahrens sieht dann eine noch weitere Schnittstelle vor, welche zur Deaktivierung oder zum Löschen der Funktionen des ersten nicht post-quanten-resistenten Absicherungsverfahrens genutzt wird. Dieses Deaktivieren oder Abschalten der Funktionen sowie gegebenenfalls auch ihr Löschen, wodurch diese ohnehin deaktiviert werden, lässt sich also durch diese noch weitere Schnittstelle entsprechend realisieren.

Die drei nun beschriebenen Schnittstellen entsprechen dabei letzten Endes drei verschiedenen Teilzuständen, welche als Voraussetzungen für die sichere Überführung des Kommunikationssystems in die Post-Quanten-Ära im Wesentlichen notwendig sind. Über die noch weitere Schnittstelle wird dementsprechend sichergestellt, dass die im Prä-Quanten-Modus genutzten konventionellen und nicht post-quanten-resistenten kryptografischen Verfahren von dem Kommunikationssystem nicht mehr genutzt werden. Über die erste genannte Schnittstelle wird eine Implementierung post-quanten-resistenter kryptografischer Verfahren ermöglicht. Über die weitere Schnittstelle, welche damit quasi in der jetzigen Aufzählung eine dritte Schnittstelle ausbildet, wird das Schlüsselmaterial an das Kommunikationssystem übertragen, um dann die über die zweite Schnittstelle gemäß der Aufzählung integrierten post-quanten-resistenten Verfahren mit dem notwendigen geheimen Schlüsselmaterial zu versorgen. Der kryptografischen Absicherung und Verschlüsselung der über die dritte Schnittstelle gegebenenfalls übertragenen Daten kommt daher eine entsprechend hohe Bedeutung zu, um geheimes Schlüsselmaterial auch tatsächlich geheim zu halten.

Nachdem über die noch weitere erste Schnittstelle, in der obigen Aufzählung, die im Prä-Quanten-Modus noch genutzten konventionellen und nicht post-quanten-resistenten Verfahren und Funktionen deaktiviert und/oder gelöscht worden sind, kann dann über eine noch weitere vierte Schnittstelle das zweite Absicherungsverfahren, welches über die zweite Schnittstelle implementiert und über die dritte Schnittstelle mit dem benötigten geheimen Schlüsselmaterial versorgt worden ist, entsprechend aktiviert werden.

Alle Schnittstellen können dabei mit kryptografischen Verfahren abgesichert sein, und sollten dies auch. Dabei spielt es im Wesentlichen keine Rolle, ob die Verfahren post-quanten-resistent sind oder nicht, wenn die Nutzung der Schnittstellen zur Herbeiführung der Funktion des Kommunikationssystems im Post-Quanten-Modus typischerweise vor dem Eintritt der Post-Quanten-Bedrohung erfolgt und damit diese Schnittstellen auch über lediglich prä-quanten-resistente Verfahren typischerweise ausreichend abgesichert werden können.

Von besonderem Vorteil, insbesondere für die besonders schutzbedürftige weitere dritte Schnittstelle, welche bei Bedarf zur Übertragung des geheimen Schlüsselmaterials genutzt werden kann, kann es auch sinnvoll sein, von vornherein eine post-quanten-resistente Methode zur kryptografischen Absicherung und insbesondere Verschlüsselung zu wählen, beispielsweise eine symmetrische Verschlüsselung mit ausreichender Schlüssellänge. Für diesen Fall ist ein initiales Geheimnis zuverlässig abgesichert in dem Kommunikationssystem zu hinterlegen.

Prinzipiell kann eine solche Absicherung auch für die anderen Schnittstellen entsprechend genutzt werden, da in Anbetracht der Post-Quanten-Bedrohung die oben genannte prinzipiell mögliche Absicherung mit nicht post-quanten-resistenten Verfahren keine Perfect Forward Secrecy (PFS) ermöglicht. Dies bedeutet, dass ein Angreifer. welcher beispielsweise vor dem Eintreten der Post-Quanten-Bedrohung übertragene und mit nicht post-quanten-resistenten Verfahren abgesicherte Kommunikationsdaten aufzeichnen kann und in der Lage ist, diese später, nachdem die Post-Quanten-Bedrohung eingetreten ist, nachträglich zu entschlüsseln. Um diesem Problem nun gänzlich aus dem Weg zu gehen, kann also für die Absicherung von vornherein ein derzeit als post-quanten-resistent geltendes Verfahren wie die symmetrische Authentifizierung und/oder Verschlüsselung mit Schlüsseln ausreichender Schlüssellänge eingesetzt werden. Da die Vorgänge zur Veränderung der Abläufe in dem Kommunikationssystem über die genannten Schnittstellen und/oder deren Implementierung selbst sowie die Implementierung neuer Funktionen durch die Schnittstellen typischerweise nicht unter die bei Fahrzeugen ansonsten häufig übliche Massenkommunikation fallen, also sehr selten, in der Regel nur einmalig, stattfinden, können die Kommunikationssysteme mit vertretbarem Aufwand mit für die Absicherung dieser Vorgänge benötigtem Schlüsselmaterial ausgestattet werden.

Eine weitere sehr günstige Ausgestaltung des erfindungsgemäßen Verfahrens kann es ferner vorsehen, dass die Deaktivierung und/oder Löschung der Funktionen des ersten Absicherungsverfahrens über die noch weitere Schnittstelle irreversibel ist. Eine solche irreversible Deaktivierung oder Löschung stellt sicher, dass zu einem späteren Zeitpunkt, bei dem dann die Post-Quanten-Bedrohung typischerweise bereits eingetreten ist, die entsprechenden Verfahren nicht wieder reaktiviert werden können. Dies würde in der Praxis nämlich dazu führen, dass die Kommunikation wieder mit den prä-quanten-resistenten Verfahren abgesichert werden würde, und damit in der Ära nach der Post-Quanten-Bedrohung nicht mehr sicher ist.

Wie bereits erwähnt sollte das Kommunikationssystem im Falle der Implementierung von wenigstens einer der Schnittstellen mit dem benötigten Schlüsselmaterial ausgestattet werden. Dies kann, muss aber nicht, initial erfolgen. Entscheidend in Bezug auf PFS ist es nur, dass das Einbringen von Schlüsselmaterial über die weitere dritte Schnittstelle, also das Einbringen des geheimen Schlüsselmaterials für den Post-Quanten-Betrieb, ausschließlich mit post-quanten-resistenter kryptografischer Verschlüsselung erfolgt.

Eine sehr günstige Ausgestaltung des erfindungsgemäßen Verfahrens kann es nun ferner vorsehen, dass für jede der Schnittstellen die Möglichkeit vorgesehen ist, einen Vorgang abgesichert als den letzten möglichen derartigen Vorgang zu markieren. Diese Möglichkeit soll dabei in der Art ausgestaltet sein, dass die bis dahin gemachten Änderungen, einschließlich dieses markierten letzten Vorgangs, in Bezug auf die jeweilige Schnittstelle irreversibel werden. Auch dies dient letztlich dazu, zu verhindern, dass über die jeweiligen Schnittstellen geänderte Funktionen, was ja letztlich die Umschaltung vom Prä-Quanten-Modus in den Post-Quanten-Modus ermöglicht, nicht mehr rückgängig gemacht werden.

Zur besonderen Absicherung des erfindungsgemäßen Verfahrens kann es dabei gemäß einer außerordentlich günstigen Weiterbildung dieses Verfahrens vorgesehen sein, dass für jede der Schnittstellen, welche über ein Softwareupdate implementierbar ist, eine eigene abgesicherte Update-Schnittstelle vorgesehen ist. Diese eigene beispielsweise integritäts- und authentifizierungsmäßig abgesicherte Update-Schnittstelle für das Softwareupdate stellt sicher, dass auch hier, falls die entsprechenden Funktionen erst im Laufe des "Lebens" des Kommunikationssystems in dieses integriert werden, sie entsprechend abgesichert sind. Die einzelnen Update-Schnittstellen für das Softwareupdate können dabei gemäß einer sehr günstigen Ausgestaltung ebenfalls die Möglichkeit vorsehen, einen Vorgang abgesichert als den letzten möglichen Vorgang zu markieren, um auch hier zu gewährleisten, dass die bis dahin gemachten Änderungen in Bezug auf die Schnittstelle irreversibel werden.

Weitere vorteilhafte Ausgestaltungen des erfindungsgemäßen Verfahrens ergeben sich auch aus dem Ausführungsbeispiel, welches nachfolgend unter Bezugnahme auf die Figuren näher beschrieben ist.

Dabei zeigen:
- Fig. 1: ein prinzipielles Kommunikationsszenario zwischen einem Fahrzeug und einem fahrzeugexternen Server; und
- Fig. 2: eine schematische Darstellung der Überführung eines Kommunikationssystems des Fahrzeugs aus einem nicht post-quanten-resistenten in einen post-quanten-resistenten Modus.

Wie eingangs erwähnt ist es typischerweise so, dass moderne Fahrzeuge Teil eines großen Fahrzeug-Ökosystems sind. Sie kommunizieren dabei mit einem fahrzeugexternen Server, dem sogenannten Backend.

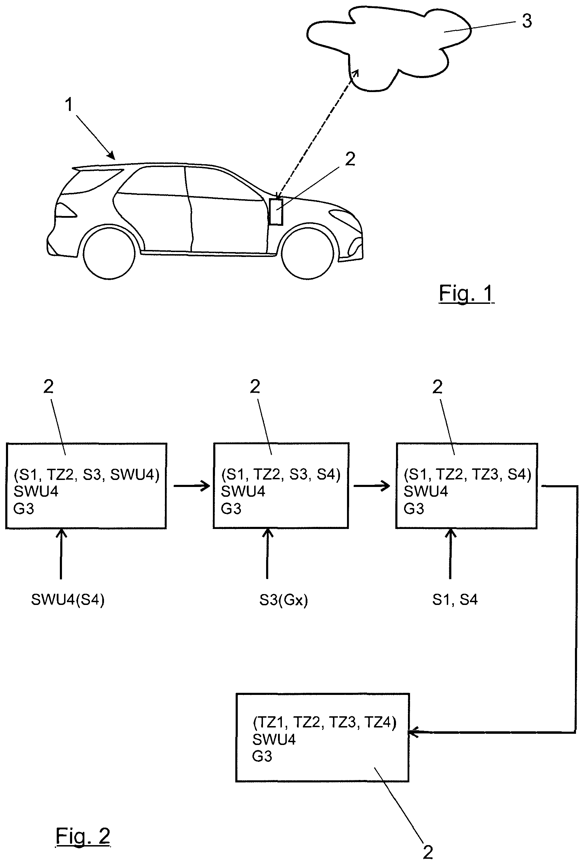

In der Darstellung der Figur 1 ist nun ein Fahrzeug 1 mit einem schematisch angedeuteten Kommunikationssystem 2 gezeigt, welches mit einem fahrzeugexternen Server in Form des Backends 3 kommuniziert. Diese Kommunikation zwischen dem Kommunikationssystem 2 des Fahrzeugs 1 und dem Backend 3 dient dabei dem Austausch verschiedener Daten beispielsweise zur Steuerung der Fahrdynamik, zur Steuerung von Navigationssystemen, zur Implementierung von Softwareupdates und/oder zur Nutzung zahlreicher Systeme und Geräte in dem Fahrzeug 1, welche Teile ihrer durch Software realisierten Funktionalitäten auf das Backend 3 ausgelagert haben. Die dabei ausgetauschten Daten unterliegen unterschiedlichen Anforderungen hinsichtlich der Sicherheit. Sie können beispielsweise entsprechend kritisch für die Fahrsicherheit sein, sodass diese zuverlässig geschützt werden müssen. Hierfür können kryptografische Verfahren zur Authentifizierung, Verschlüsselung und/oder zum Identitätsschutz zum Einsatz kommen. Bei anderen Daten ist vor allem die Verschlüsselung wichtig, um beispielsweise die Privatsphäre des Nutzers des Fahrzeugs 1 zu wahren, bei wieder anderen Daten wie beispielsweise bei Softwareupdates oder dergleichen ist es vor allem entscheidend, dass eine zuverlässige Authentifizierung gegeben ist, sodass die Systeme in dem Fahrzeug 1 darauf vertrauen können, dass das Softwareupdate von einer entsprechend autorisierten und vertrauenswürdigen Stelle, wie z.B. dem Backend 3, zur Verfügung gestellt wird.

Um sicherzustellen, dass das Kommunikationssystem, welches derzeit mit nicht post-quanten resistenten Verfahren abgesichert ist, auch nach dem Eintritt der eingangs beschriebenen Post-Quanten-Bedrohung noch sicher und im vollen Funktionsumfang genutzt werden kann, wird eine Absicherung zu einem zukünftigen Zeitpunkt mit post-quanten-resistenten Verfahren angestrebt. Um das Kommunikationssystem 2 nun sicher in einem solchen Post-Quanten-Modus betreiben zu können, müssen primär die folgenden vier Voraussetzungen erfüllt sein:
1. Es ist sichergestellt, dass die im ersten Absicherungsverfahren im Prä-Quanten-Modus genutzten konventionellen nicht post-quanten-resistenten kryptographischen Verfahren vom Kommunikationssystem 2 nicht mehr genutzt werden.
2. In dem Kommunikationssystem 2 liegen Implementierungen von post-quanten-resistenten kryptographischen Verfahren vor.
3. In dem Kommunikationssystem 2 liegt das für die Nutzung der implementierten post-quanten-resistenten kryptographischen Verfahren benötigte Schlüsselmaterial vor.
4. Die in dem Kommunikationssystem 2 implementierten post-quanten-resistenten kryptographischen Verfahren samt dem dazugehörigen Schlüsselmaterial werden vom Kommunikationssystem 2 zu dessen Absicherung, bspw. zum Schutz der Kommunikation mit dem fahrzeugexternen Backend 3, genutzt.

Diese vier Voraussetzungen entsprechen vier Teilzuständen (TZ1 bis TZ4), in denen sich das Kommunikationssystem 2 befinden muss, um post-quanten-resistent geschützt zu sein. Dabei wird das Kommunikationssystem 2 genau dann als im Teilzustand TZi betrachtet, wenn es die Voraussetzung bzw. Bedingung i. erfüllt ist.

Figur 2 zeigt verschiedene Zustände des Kommunikationssystems 2 mit den darin angegebenen Teilzuständen TZi und weiteren noch erläuterten Parametern. Nur im in der zweiten Reihe dargestellten Zustand (TZ1, TZ2, TZ3, TZ4) ist das Kommunikationssystem 2 dabei post-quanten-resistent.

Die vier Teilzustände TZi sind nicht unabhängig voneinander. Insbesondere sind die Teilzustände TZ2 (Das Vorliegen von Implementierungen von post-quanten-resistenten Verfahren) und TZ3 (Das Vorliegen von dazugehörigem (geheimen) Schlüsselmaterial) Voraussetzungen für den Teilzustand TZ4 (Die Nutzung post-quanten-resistenter Verfahren). Das bedeutet, dass das Kommunikationssystem 2 zuerst in die Teilzustände TZ2 und TZ3 versetzt werden muss, bevor es in den Teilzustand TZ4 versetzt werden kann. Sinnvollerweise sollte das Kommunikationssystem 2 auch im Teilzustand TZ1 (Die Nicht-Nutzung bzw. Deaktivierung konventioneller nicht post-quanten-resistenter Verfahren) sein, bevor es in den Teilzustand TZ4 versetzt werden kann. Die Teilzustände TZ1, TZ2 Und TZ3 sind hingegen voneinander unabhängig, in diese Teilzustände kann das Kommunikationssystem 2 in beliebiger Reihenfolge versetzt werden.

Das Kommunikationssystem 2 kann dabei auf zweierlei Weise in jeden der vier Teilzustände TZ1, TZ2, TZ3, TZ4 kommen. Zum einen kann es sich bereits bei Auslieferung in diesem Teilzustand befinden. Zum anderen kann es während des Betriebs bspw. durch eine Remote-Funktion oder in der Werkstatt auf sichere Weise in diesen Teilzustand TZ1, TZ2, TZ3, TZ4 versetzt werden. Dafür muss das Kommunikationssystem 2 mit geeigneten Schnittstellen S1, S2, S3, S4, mit deren Hilfe der Zustandsübergang bewerkstelligt werden kann, ausgestattet sein. Um einen Missbrauch dieser Schnittstellen S1, S2, S3, S4 auszuschließen, müssen diese entsprechend geschützt bzw. abgesichert sein.

Befindet sich das Kommunikationssystem 2 bereits bei Auslieferung in einem bestimmten Teilzustand TZ1, TZ2, TZ3, TZ4, so wird keine Schnittstelle S1, S2, S3, S4 benötigt, mit der es in diesen Teilzustand TZ1, TZ2, TZ3, TZ4 versetzt werden kann. Liegen bspw. Implementierungen post-quanten-resistenter Verfahren im Kommunikationssystem 2 von vornherein vor, so müssen diese nicht nachträglich in das Kommunikationssystem 2 eingebracht werden. Liegen sie nicht vor, so wird eine entsprechende Schnittstelle S2 benötigt, die ein sicheres Einbringen dieser Implementierungen in die bereits ausgelieferten und sich im Feld befindlichen Kommunikationssysteme 2 ermöglicht. In einem Extremfall befindet sich das Kommunikationssystem 2 bei Auslieferung in keinem der vier Teilzustände TZ1, TZ2, TZ3, TZ4. Das bedeutet, es benötigt Schnittstellen S1, S2, S3, S4, um auf sichere Weise die nicht post-quanten-resistenten Verfahren abzuschalten, das Kommunikationssystem 2 mit Implementierungen post-quanten-resistenter Verfahren und dazugehörigem Schlüsselmaterial zu versorgen und diese Implementierungen anschließend für die Nutzung einzuschalten. Im anderen Extremfall sind in dem Kommunikationssystem 2 bereits bei Auslieferung alle vier Teilzustände TZ1, TZ2, TZ3, TZ4 erfüllt. Damit wären dann alle vier der obigen Voraussetzungen gegeben und das Kommunikationssystem 2 wäre von vornherein post-quanten-resistent geschützt.

Es benötigt dann keine der Schnittstellen S1, S2, S3, S4, und auch keine Aktionen, um in Zukunft post-quanten-resistent werden zu können.

Jede dieser vier Schnittstellen S1, S2, S3, S4, soweit benötigt und vorhanden, muss gegen Missbrauch abgesichert sein. Dabei haben die vier Schnittstellen S1, S2, S3, S4 unterschiedliche Schutzbedürfnisse. Bei den Schnittstellen S1, S2 und S4 spielt die Integrität der Daten bzw. die Authentizität des Nutzers dieser Schnittstellen S1, S2 und S4 eine zentrale Rolle, bspw. die Integrität der bei der Nutzung der Schnittstelle S2 übertragenen Implementierungen der post-quanten-resistenten Verfahren. Die Vertraulichkeit der Daten, bspw. die Vertraulichkeit der über die Schnittstelle S2 ins Kommunikationssystem 2 eingebrachten Implementierungen post-quanten-resistenter Verfahren, ist hingegen von geringerer Bedeutung. Bei der Schnittstelle S3 zum Einbringen von Schlüsselmaterial für post-quanten-resistente Verfahren ist jedoch sowohl die Integrität/Authentizität als auch die Vertraulichkeit der Daten, hier also des Schlüsselmaterials, von entscheidender Bedeutung.

Die Absicherung der Schnittstellen S1, S2, S3, S4 kann sowohl mit Hilfe konventioneller nicht post-quanten-resistenter Verfahren als auch mit Hilfe post-quanten-resistenter Verfahren vorgenommen werden, wie es oben schon beschrieben und mit Beispielen belegt worden ist.

Im Vergleich zu einer Absicherung mit post-quanten-resistenten Verfahren ist die Absicherung einer der vier Schnittstellen mit Hilfe nicht post-quanten-resistenter Verfahren aus zwei Gründen weniger sicher.
1. Eine mit nicht post-quanten-resistenten Verfahren abgesicherte Schnittstelle kann nach dem Eintreten der Post-Quanten-Bedrohung nicht mehr sicher genutzt werden.
2. In Anbetracht der Post-Quanten-Bedrohung bietet eine Absicherung mit nicht post-quanten-resistenten Verfahren keine Perfect Forward Secrecy (PFS). Das bedeutet, sollte ein Angreifer bspw. die vor dem Eintreten der Post-Quanten-Bedrohung stattgefundene mit nicht post-quanten-resistenten Verfahren abgesicherte Kommunikation aufzeichnen, ist er im Nachhinein, d.h. nach dem Eintreten der Post-Quanten-Bedrohung, ggf. in der Lage, beliebige frei gewählte eigene Daten für den Empfänger nicht unterscheidbar zu authentifizieren und verschlüsselte Inhalte zu entschlüsseln.

Die Auswirkung der ersten Schwäche kann umgangen werden, wenn die jeweilige mit nicht post-quanten-resistenten Verfahren abgesicherte Schnittstelle S1, S2, S3, S4 ausschließlich vor dem Eintreten der Post-Quanten-Bedrohung genutzt wird, also das Kommunikationssystem 2 unter deren Ausnutzung vor dem Eintreten der Post-Quanten-Bedrohung in den entsprechenden Teilzustand TZ1, TZ2, TZ3, TZ4 und damit sicher in das zweite Absicherungsverfahren für den Post-Quanten-Modus überführt wird. Dabei muss sichergestellt werden, dass keine der Schnittstellen S1, S2, S3, S4 dazu genutzt werden kann, diese Überführung rückgängig zu machen. Dies gilt insbesondere im Falle der Schnittstelle S1, die die nicht post-quanten-resistenten Verfahren im Kommunikationssystem 2 deaktiviert, was bspw. mit der Implementierung eines sicheren irreversiblen Post-Quanten-Bits, analog der Beschreibung in der oben genannten älteren deutschen Patentanmeldung 10 2020 001 199.3, also z.B. mit einem in einem abgesicherten Hardware Security Modul (HSM) befindlichen Write-Once-Memory (WOM) sichergestellt werden kann.

Die zweite Schwäche wirkt sich unterschiedlich auf die einzelnen Schnittstellen S1, S2, S3, S4 aus. Wie oben bereits erwähnt, haben die Schnittstellen S1, S2 und S4 ein hohes Integritäts- und Authentizitäts- aber ein geringes Vertraulichkeitsbedürfnis. Das bedeutet, dass, solange sichergestellt ist, dass vor dem Eintreten der Post-Quanten-Bedrohung vorgenommene Übergänge in die Teilzustände TZ1, TZ2 und/oder TZ4 über durch nicht post-quanten-resistente Verfahren abgesicherte Schnittstellen S1, S2 und/oder S4 nach dem Eintreten der Post-Quanten-Bedrohung nicht mit Hilfe bspw. der gleichen mit nicht post-quanten-resistenten Verfahren abgesicherten Schnittstellen S1, S2 und/oder S4 zurückgenommen werden können die vor dem Eintreten der Post-Quanten-Bedrohung vorgenommenen Zustandsübergänge sicher sind, auch wenn sie mit nicht post-quanten-resistenten Verfahren abgesichert gewesen waren. Das kann beispielsweise dadurch erreicht werden, dass die Schnittstellen S1, S2, S4 vor dem Eintreten der Post-Quanten-Bedrohung deaktiviert werden. Somit ist der Umstieg auf post-quanten-resistente Absicherung der Schnittstellen S1, S2 und/oder S4 nicht notwendig, solange diese ausschließlich vor dem Eintreten der Post-Quanten-Bedrohung genutzt werden und somit also ein irreversibler Übergang in die Teilzustände TZ1, TZ2 und/oder TZ4 bereits vor dem Eintreten der Post-Quanten-Bedrohung vorgenommen wird.

Die Schnittstelle S3 hingegen, die dem Einbringen neuen Schlüsselmaterials in das Kommunikationssystem 2 dient, hat zusätzlich ein hohes Vertraulichkeitsbedürfnis. Das bedeutet, "auf Vorrat" aufgezeichnete Übertragungen mit nicht post-quanten-resistenten Verfahren verschlüsselter Daten könnten nach dem Eintreten der Post-Quanten-Bedrohung von einem Angreifer ggf. entschlüsselt werden. Auch wenn die Aufzeichnung verschlüsselt ausgetauschter Nachrichten, die zum Zeitpunkt der Aufzeichnung nicht entschlüsselt werden können, aufwändig und teuer ist, kann diese nicht ausgeschlossen werden. Somit bietet eine initiale Absicherung der Schnittstelle S3 ausschließlich mit post-quanten-resistenten Verfahren einen Sicherheitsgewinn im Vergleich zu deren initialen Absicherung mit nicht post-quanten-resistenten Verfahren, auch wenn die Schnittstelle S3 ausschließlich vor dem Eintreten der Post-Quanten-Bedrohung genutzt werden sollte. Soll eine Schnittstelle S1, S2, S3, S4 mit gleichen kryptographischen Verfahren vor und nach dem Eintreten der Post-Quanten-Bedrohung sicher betrieben werden können, so muss sie von Vornherein, also bei der Auslieferung des Kommunikationssystems 2, mit post-quanten-resistenten Verfahren, wie z.B. ausschließlich symmetrischen Verfahren mit ausreichend langen Schlüsseln, abgesichert werden.

Dabei müssen die einzelnen Schnittstellen S1, S2, S3, S4 nicht entweder alle mit nicht post-quanten-resistenten oder alle mit post-quanten-resistenten Verfahren geschützt werden, es kann vielmehr jede Schnittstelle individuell mit nicht post-quanten-resistenten oder post-quanten-resistenten Verfahren geschützt werden. Je nach Art des Schutzes kann sie dann nur vor dem Eintreten der Post-Quanten-Bedrohung oder auch danach sicher genutzt werden.

Je nach verwendeten kryptographischen Verfahren muss das Kommunikationssystem 2 zum Zeitpunkt der Nutzung einer jeden der Schnittstellen S1, S2, S3, S4 über das zu deren Schutz benötigte kryptographische Material verfügen.

Jede der vier Schnittstellen S1, S2, S3, S4 wird zumindest in großen Teilen in Softwarte realisiert. Das bedeutet, jede dieser Schnittstellen S1, S2, S3, S4 kann somit bereits vor der Inbetriebnahme des Kommunikationssystems 2 in diesem umgesetzt worden sein oder sie kann alternativ nachträglich, während des Betriebs, in das Kommunikationssystem 2 mit Hilfe einer generellen Software-Update-Schnittstelle, entweder als Remote-Update über z.B. das Backend 3 oder bspw. auch in einer Werkstatt, aufgespielt werden.

Voraussetzung für die Nutzung einer Software-Update-Schnittstelle SWU zum Einbringen von einer oder mehreren Schnittstellen S1, S2, S3, S4 in das Kommunikationssystem 2 ist, dass die verwendete Software-Update-Schnittstelle SWU das Einbringen der jeweiligen Schnittstellen S1, S2, S3, S4, die relativ tiefe Eingriffe in das Kommunikationssystem 2 vornehmen können, auch unterstützt. Bei den einzelnen Schnittstellen S1, S2, S3, S4 kann es sich dabei insbesondere um hardwarenahe Schnittstellen handeln, welche in der allgemeinen Praxis meist nicht verändert werden und sehr eng mit dem eingesetzten Hardware-Aufbau des Kommunikationssystems 2 verbunden sein können. Alleine schon deshalb macht es Sinn, für jede gegebenenfalls durch ein Softwareupdate nachträglich zu implementierende Schnittstelle S1, S2, S3, S4 eine eigene Software-Update-Schnittstelle SWU1, SWU2, SWU3, SWU4 vorzusehen.

So eine Software-Update-Schnittstelle SWU muss wiederum gegen Missbrauch abgesichert werden, wobei wiederum nicht post-quanten-resistente oder post-quanten-resistente Verfahren genutzt werden können. Da bei der Nutzung der Software-Update-Schnittstelle SWU kein besonderes Vertraulichkeitsbedürfnis besteht und die Priorität eindeutig auf der Integrität und der Authentizität der Daten liegt, kann, analog zu den Schnittstellen S1, S2 und S4, eine mit nicht post-quanten-resistenten Verfahren abgesicherte Software-Update-Schnittstelle SWU sicher zum Einbringen von Implementierungen der Schnittstellen S1 bis S4 genutzt werden, solange dieses Einbringen vor dem Eintreten der Post-Quanten-Bedrohung vorgenommen wird und die jeweilige Software-Update-Schnittstelle SWU noch vor dem Eintreten der Post-Quanten-Bedrohung deaktiviert wird.

Dabei sind auch hier die Arten der Absicherungen, also nicht post-quanten-resistent oder post-quanten-resistent, der Software-Update-Schnittstelle SWU und der Schnittstellen S1, S2, S3, S4 voneinander unabhängig und können beliebig kombiniert werden. D.h. bspw., dass die Software-Update-Schnittstelle SWU nicht post-quanten-resistent und eine der Schnittstellen S1, S2, S3, S4 post-quanten-resistent oder andersherum abgesichert sein können. Dabei muss sinnvollerweise stets berücksichtigt werden, dass durch nicht post-quanten-resistente Verfahren abgesicherte Schnittstellen nach dem Eintreten der Post-Quanten-Bedrohung nicht mehr sicher genutzt werden können. Vorzugsweise verfügt jede der über ein Software-Update einzubringenden Schnittstelle S1, S2, S3, S4 über eine eigens für Sie konzipierte und abgesicherte Software-Update-Schnittstelle SWU1, SWU2, SWU3, SWU4, wie in Figur 2 angedeutet.

Ist die Software-Update-Schnittstelle SWU oder eine der Schnittstellen S2, S3, S4 mit nicht post-quanten-resistenten Verfahren abgesichert und befindet sich das Kommunikationssystem 2 in Teilzustand TZ1, der die Nutzung nicht post-quanten-resistenter Verfahren unterbindet, so können diese Schnittstellen nicht mehr genutzt werden. Dieses muss bei der Reihenfolge des Einbringens der Schnittstellen S2, S3, S4 in das Kommunikationssystem 2 mittels der Software-Update-Schnittstelle SWU sowie der Aufrufe der Schnittstellen S1, S2, S3, S4 und des damit zusammenhängenden Versetzens des Kommunikationssystems 2 in die Teilzustände TZ1, TZ2, TZ3, TZ4 berücksichtigt werden.

Die zur Absicherung der Software-Update-Schnittstelle SWU bzw. der Schnittstellen S1, S2, S3, S4 eingesetzten kryptographischen Verfahren benötigen geeignetes Schlüsselmaterial. Liegt der Fokus einer Schnittstelle SWU, S1, S2, S4 auf der Integrität und/oder der Authentizität der in das Kommunikationssystem 2 eingebrachten Daten, so genügt es, im Falle der Verwendung konventioneller asymmetrischer Verfahren (digitale Signatur), zu deren Prüfung im Kommunikationssystem 2 dieses mit nicht-vertraulichem Schlüsselmaterial (öffentliche Schlüssel, Zertifikate) auszustatten. Diese können initial aber auch jederzeit später über nicht-vertraulichkeitsgeschützte Schnittstellen, wie bspw. die Software-Update-Schnittstellen SWU, sicher in das Kommunikationssystem 2 eingebracht werden. Die Schnittstelle S3 benötigt jedoch Vertraulichkeit, zu deren Herstellung eine initiale Ausstattung des Kommunikationssystems 2 mit geheimem Schlüsselmaterial G3 unabdingbar ist.

In der Darstellung der Figur 2 ist nun also wie oben bereits erwähnt das Kommunikationssystem 2 mehrfach in verschiedenen Zuständen dargestellt und durch die entsprechenden Pfeile, welche die Zustandsübergänge darstellen, verbunden. Die drei oberen Darstellungen des Kommunikationssystems 2 zeigen dieses im noch nicht post-quanten-resistenten Betrieb, die Darstellung unten zeigt es dann im post-quanten-resistenten Betrieb, nachdem dieser erreicht worden ist.

In der Darstellung oben links sind innerhalb des Kommunikationssystems 2 in der Klammer die verschiedenen Zustände und Schnittstellen entsprechend dargestellt. S1 bezeichnet die erste Schnittstelle, TZ2 bedeutet hier, dass der zweite Teilzustand bereits erreicht ist, dass also die post-quanten-resistenten Verfahren prinzipiell bereitliegen. Die Schnittstelle 3 ist ebenfalls vorhanden, die Schnittstelle S4, um den Teilzustand TZ4 herzustellen, fehlt. Daneben hat das Kommunikationssystem jedoch initialimplementiert die Software-Update-Schnittstelle SWU4, also diejenige für die Schnittstelle S4. Außerdem umfasst das Kommunikationssystem 2 initial, manipulationssicher und gegen Auslesen sicher abgelegt in dem Kommunikationssystem 2, also beispielsweise in einem HSM gespeichert, das Geheimnis G3, das als initial abgelegtes Geheimnis G3 für die Kommunikation über die Schnittstelle S3 benötigt wird. Der von unten kommende Pfeil zeigt nun die Nutzung der Software-Update-Schnittstelle SWU4(S4) für das Implementieren der Schnittstelle S4.

Die bereits initial vorhandene Software-Update-Schnittstelle SWU4 wird nun also aktiv genutzt. Im nachfolgenden Zustand, welcher durch die mittlere Darstellung des Kommunikationssystems 2 gezeigt ist, ist dann die Schnittstelle S4 entsprechend installiert. Die durchgeführte Änderung könnte nun irreversibel gemacht werden, indem die Software-Update-Schnittstelle SWU4 deaktiviert oder gelöscht wird, dieses ist hier jedoch nicht geschehen, die aktuelle Implementierung S4 könnte damit unter Ausnutzung von SWU4 in Zukunft noch überschrieben werden. Sie ist daher in den nachfolgenden Varianten jeweils noch dargestellt.

Unter Nutzung des initialen Geheimnisses G3 kann nun über die bereits vorhandene Schnittstelle S3 das ausschließlich für den Post-Quanten-Modus benötigte zusätzliche Geheimnis, welches hier mit Gx bezeichnet ist, entsprechend nachgeladen werden, wofür die Schnittstelle S3 die bereits mehrfach angesprochenen Bedingungen an Authentizität, Integrität und insbesondere Vertraulichkeit aufgrund des Geheimnisses G3 und beispielsweise einer symmetrischen Verschlüsselung mit ausreichend langem Schlüssel gewährleistet. Nach diesem Schritt liegen nun also die Schnittstellen S1 und S4 sowie die Teilzustände TZ2 und TZ3 in dem in der oberen Reihe rechts dargestellten Zustand des Kommunikationssystems 2 vor. Durch die in diesem Schritt angedeutete Anwendung der Schnittstelle S1 zum Abschalten der bisherigen nicht post-quanten-resistenten Verfahren und Protokolle, also des ersten Absicherungsverfahrens, und das Aufschalten des zweiten post-quanten-resistenten Absicherungsverfahrens mittels der Schnittstelle S4 werden nun auch die Teilzustände TZ1 und TZ4 entsprechend erfüllt. Dieser Zustand des Kommunikationssystems 2 mit allen erfüllten Teilzuständen TZ1, TZ2, TZ3 und TZ4 ist dann in der Darstellung der Figur 2 unten zu erkennen. In diesem Zustand ist das Kommunikationssystem 2 durch das erfindungsgemäße Verfahren in einen post-quanten-resistenten Betriebsmodus sicher überführt worden.

## Patentansprüche

1. Verfahren zur Absicherung der Kommunikation zwischen einem Kommunikationssystem (2) eines Fahrzeugs (1) und einem fahrzeugexternen Server (3) über eine Kommunikationsschnittstelle, welche in der Art abgesichert ist, dass Daten integritäts- und authentizitätsgeschützt sowie bei Bedarf vertraulich zu dem Kommunikationssystem (2) übertragen werden können, wobei ein erstes Absicherungsverfahren zur nicht post-quanten-resistenten Absicherung von ausgetauschten Daten über die Kommunikationsschnittstelle in das Kommunikationssystem (2) implementiert ist,
**dadurch gekennzeichnet, dass**
ein zweites Absicherungsverfahren zur post-quanten-resistenten Absicherung von ausgetauschten Daten über die Kommunikationsschnittstelle in das Kommunikationssystem (2) implementiert ist oder über eine Schnittstelle (S2), welche ihrerseits in das Kommunikationssystem (2) implementiert ist oder über ein Softwareupdate implementiert wird, implementiert wird, wobei ein Geheimnis zur ausschließlichen Nutzung in dem zweiten Absicherungsverfahren über eine weitere Schnittstelle (S3), welche ihrerseits in das Kommunikationssystem (2) implementiert ist oder über ein Softwareupdate implementiert werden kann, einbringbar ist, kryptographisch verschlüsselt empfangen und zur ausschließlichen Nutzung in dem zweiten Absicherungsverfahren sicher abgelegt wird, wobei das Einbringen von Schlüsselmaterial über die weitere Schnittstelle (S3) mit post-quanten-resistenter kryptografischer Verschlüsselung erfolgt, wozu eine initiale Ausstattung des Kommunikationssystems (2) mit geheimem Schlüsselmaterial (G3) erfolgt.

2. Verfahren nach Anspruch 1,
**dadurch gekennzeichnet, dass**
die Funktionen des ersten Absicherungsverfahrens im Falle des Eintritts einer Post-Quanten-Bedrohung mittels einer noch weiteren Schnittstelle (S1) deaktiviert und/oder gelöscht werden.

3. Verfahren nach Anspruch 2,
**dadurch gekennzeichnet, dass**
im Falle des Eintritts der Post-Quanten-Bedrohung mittels einer noch weiteren vierten Schnittstelle (S4) das zweite Absicherungsverfahren zur alleinigen Absicherung von über die Kommunikationsschnittstelle ausgetauschten Daten aktiviert wird.

4. Verfahren nach Anspruch 2 oder 3,
**dadurch gekennzeichnet, dass**
die Deaktivierung und/oder Löschung der Funktionen des ersten Absicherungsverfahrens über die noch weitere Schnittstelle (S1) irreversibel ist.

5. Verfahren nach einem der Ansprüche 1 bis 4,
**dadurch gekennzeichnet, dass**
das Kommunikationssystem (2) im Falle der Implementierung von wenigstens einer der Schnittstellen (S1, S2, S3, S4) mit dem benötigten Schlüsselmaterial ausgestattet wird.

6. Verfahren nach Anspruch 5,
**dadurch gekennzeichnet, dass**
die Ausstattung initial erfolgt.

7. Verfahren nach einem der Ansprüche 1 bis 6,
**dadurch gekennzeichnet, dass**
für jede der Schnittstellen (S1, S2, S3, S4) die Möglichkeit vorgesehen ist, einen Vorgang abgesichert als den letzten möglichen Vorgang zu markieren, wobei diese Möglichkeit in der Art ausgestaltet ist, dass die bis dahin gemachten Änderungen in Bezug auf die jeweilige Schnittstelle (S1, S2, S3, S4) irreversibel werden.

8. Verfahren nach einem der Ansprüche 1 bis 7,
**dadurch gekennzeichnet, dass**
für jede der Schnittstellen(S1, S2, S3, S4), welche über ein Softwareupdate implementierbar ist eine eigene abgesicherte Software-Update-Schnittstelle (SWU1, SWU2, SWU3, SWU4) vorgesehen wird.

9. Verfahren nach Anspruch 8,
**dadurch gekennzeichnet, dass**
für jede der Software-Update-Schnittstellen (SWU1, SWU2, SWU3, SWU4) die Möglichkeit vorgesehen ist, einen Vorgang abgesichert als den letzten möglichen Vorgang zu markieren, wobei diese Möglichkeit in der Art ausgestaltet ist, dass die bis dahin gemachten Änderungen in Bezug auf die Software-Update-Schnittstelle (SWU1, SWU2, SWU3, SWU4) irreversibel werden.

## Claims

1. Method for securing communication between a communication system (2) of a vehicle (1) and a vehicle-external server (3) via a communication interface which is secured in such a way that data can be transmitted to the communication system (2) with integrity protection and authenticity protection and, if necessary, confidentially, wherein a first securing method for non-post-quantum-resistant securing of exchanged data is implemented in the communication system (2) via the communication interface,
**characterized in that**
a second securing method for post-quantum-resistant securing of exchanged data is implemented in the communication system (2) via the communication interface,or is implemented via an interface (S2) which in turn is implemented in the communication system (2) or is implemented via a software update, wherein a secret for exclusive use in the second securing method can be introduced via an additional interface (S3) which in turn is implemented in the communication system (2) or can be implemented via a software update, which secret is received in a cryptographically encrypted manner and is securely stored for exclusive use in the second securing method, wherein the introduction of key material via the additional interface (S3) takes place with post-quantum-resistant cryptographic encryption, for which purpose initial equipping of the communication system (2) with secret key material (G3) is carried out.

2. Method according to claim 1,
**characterized in that**
the functions of the first securing method are deactivated and/or deleted by means of an additional interface (S1) in the event of a post-quantum threat.

3. Method according to claim 2,
**characterized in that**
in the event of the post-quantum threat, the second securing method is activated by means of an additional fourth interface (S4) to solely secure data exchanged via the communication interface.

4. Method according to claim 2 or claim 3,
**characterized in that**
the deactivation and/or deletion of the functions of the first securing method via the additional interface (S1) is irreversible.

5. Method according to any of claims 1 to 4,
**characterized in that**
the communication system (2) is equipped with the required key material in the event of the implementation of at least one of the interfaces (S1, S2, S3, S4).

6. Method according to claim 5,
**characterized in that**
the equipping is carried out initially.

7. Method according to any of claims 1 to 6,
**characterized in that**
the option to securely mark a process as the last possible process is provided for each of the interfaces (S1, S2, S3, S4), wherein this option is designed in such a way that the changes made up to that point with regard to the relevant interface (S1, S2, S3, S4) become irreversible.

8. Method according to any of claims 1 to 7,
**characterized in that**
a separate secured software update interface (SWU1, SWU2, SWU3, SWU4) is provided for each of the interfaces (S1, S2, S3, S4) that can be implemented via a software update.

9. Method according to claim 8,
**characterized in that**
the option to securely mark a process as the last possible process is provided for each of the software update interfaces (SWU1, SWU2, SWU3, SWU4), wherein this option is designed in such a way that the changes made up to that point with regard to the software update interface (SWU1, SWU2, SWU3, SWU4) become irreversible.

## Revendications

1. Procédé permettant la sécurisation de la communication entre un système de communication (2) d'un véhicule (1) et un serveur (3) externe au véhicule par l'intermédiaire d'une interface de communication qui est sécurisée de telle sorte que des données peuvent être transmises au système de communication (2) avec une protection de l'intégrité et de l'authenticité et, si nécessaire, de manière confidentielle, dans lequel un premier procédé de sécurisation permettant la sécurisation non résistante post-quantique de données échangées par l'intermédiaire de l'interface de communication est mis en œuvre dans le système de communication (2),
**caractérisé en ce**
**qu'**un second procédé de sécurisation permettant la sécurisation résistante post-quantique de données échangées est mis en œuvre dans le système de communication (2) par l'intermédiaire de l'interface de communication ou est mis en œuvre par l'intermédiaire d'une interface (S2) qui est elle-même mise en œuvre dans le système de communication (2) ou est mise en œuvre par l'intermédiaire d'une mise à jour logicielle, dans lequel un secret peut être introduit pour l'utilisation exclusive dans le second procédé de sécurisation par l'intermédiaire d'une interface (S3) supplémentaire, qui est elle-même mise en œuvre dans le système de communication (2) ou peut être mise en œuvre par l'intermédiaire d'une mise à jour logicielle, est reçu sous forme cryptée de manière cryptographique et est stocké de manière sûre pour l'utilisation exclusive dans le second procédé de protection, dans lequel l'introduction de matériau de clé par l'intermédiaire de l'interface (S3) supplémentaire s'effectue avec un cryptage cryptographique post-quantique, ce pour quoi une dotation initiale du système de communication (2) en matériau de clé secret (G3) est effectuée.

2. Procédé selon la revendication 1,
**caractérisé en ce que**
les fonctions du premier procédé de protection sont désactivées et/ou supprimées en cas de survenance d'une menace post-quantique à l'aide d'une autre interface (S1) supplémentaire.

3. Procédé selon la revendication 2,
**caractérisé en ce**
**qu'**en cas de survenance de la menace post-quantique, à l'aide d'une autre quatrième interface (S4) supplémentaire, le second procédé de sécurisation est activé pour la sécurisation unique des données échangées par l'intermédiaire de l'interface de communication.

4. Procédé selon la revendication 2 ou 3,
**caractérisé en ce que**
la désactivation et/ou la suppression des fonctions du premier procédé de sécurisation par l'intermédiaire de l'autre interface (S1) supplémentaire est irréversible.

5. Procédé selon l'une des revendications 1 à 4,
**caractérisé en ce que**
le système de communication (2) est équipé du matériau de clé nécessaire dans le cas de la mise en œuvre d'au moins une des interfaces (S1, S2, S3, S4).

6. Procédé selon la revendication 5,
**caractérisé en ce que**
l'équipement s'effectue initialement.

7. Procédé selon l'une des revendications 1 à 6,
**caractérisé en ce que**
pour chacune des interfaces (S1, S2, S3, S4), il est prévu la possibilité de marquer de manière sécurisée une opération comme étant la dernière opération possible, dans lequel cette possibilité est conçue de telle sorte que les modifications apportées jusqu'alors par rapport à l'interface (S1, S2, S3, S4) respective deviennent irréversibles.

8. Procédé selon l'une des revendications 1 à 7,
**caractérisé en ce que**
pour chacune des interfaces (S1, S2, S3, S4), qui peut être mise en œuvre par l'intermédiaire d'une mise à jour logicielle, une interface de mise à jour logicielle (SWU1, SWU2, SWU3, SWU4) sécurisée propre est prévue.

9. Procédé selon la revendication 8,
**caractérisé en ce que**
pour chacune des interfaces de mise à jour de logiciel (SWU1, SWU2, SWU3, SWU4), il est prévu la possibilité de marquer de manière sécurisée une opération comme étant la dernière opération possible, dans lequel cette possibilité est conçue de telle sorte que les modifications apportées jusqu'alors par rapport à l'interface de mise à jour de logiciel (SWU1, SWU2, SWU3, SWU4) deviennent irréversibles.
